# FASCICULE DE BREVET EUROPEEN

(11) **EP 0 406 048 B1**
(45) Date de publication et mention de la délivrance du brevet: **22.09.1993**
(21) Numéro de dépôt: 90401663.1
(22) Date de dépôt: 14.06.1990
(51) Int. Cl.: C02F 1/24, B03D 1/14

(54) **Procédé et dispositif d'injection de fluides dans un bassin de flottation**
Verfahren und Vorrichtung zum Einspritzen flüssiger Stoffe in ein Flotationsbecken
Method and device for the injection of fluids into a flotation tank

(30) Priorité: 26.06.1989 FR 8908468
(43) Date de publication de la demande: 02.01.1991
(73) Titulaire: "DEGREMONT" Société dite:, F-92508 Rueil-Malmaison Cédex (FR)
(72) Inventeur: Vion, M.Patrick, F-78800 Houilles (FR)
(74) Mandataire: Armengaud Ainé, Alain

(56) Documents cités:
- FR-A- 2 115 053
- FR-A- 2 596 293
- NL-A- 8 602 243
- CHEMIE INGENIEUR TECHNIK, vol. 53, no. 8, août 1981, Verlag Chemie GmbH, Weinheim, DE; M. ZLOKARNIK: "Neue Wege bei der flotativen Aufbereitung und Abwasserreinigung in der chemischen Industrie"

## Description

La présente invention concerne un procédé et un dispositif d'injection de fluides dans une enceinte où est réalisée la séparation, par flottation, des particules en suspension dans un liquide, la flottation étant opérée par détente d'un liquide saturé de gaz sous pression dans le liquide à traiter.

Le procédé ainsi que le dispositif suivant l'invention sont applicables, en particulier, en traitent des eaux, à la flottation d'eaux préalablement floculées.

Les conditions essentielles à satisfaire pour réaliser une flottation efficace sont les suivantes :

Il faut d'abord détendre le liquide pressurisé, très généralement l'eau, sous pression de façon à obtenir la formation de bulles de gaz très petites, ou microbulles.

Il faut ensuite mélanger le liquide, tel qu'eau pressurisée, au liquide à traiter de façon à assurer une mise en contact des microbulles et des particules en suspension dans le liquide à traiter avec une énergie suffisante pour assurer l'accrochage des unes par les autres. Toutefois le contact produit lors du mélange ne doit pas être trop violent, pour éviter une destruction des particules qui, dans le cas du traitement des eaux, spécialement après floculation, sont fragiles.

On a déjà proposé divers procédés et dispositifs pour réaliser une flottation efficace.

C'est ainsi que la solution proposée par FR-A- 2 115 053, permet de satisfaire les conditions susvisées. Suivant ce brevet, la formation de microbulles est assurée par une double détente au moyen de deux vannes disposées successivement sur la canalisation de liquide pressurisé. Le mélange est réalisé dans un pot cylindrique à la base duquel et en son centre arrive l'eau brute à traiter. L'eau pressurisée détendue, chargée de microbulles, arrive à la base du pot par une tubulure horizontale dans une direction excentrée et non tangentielle telle que la veine liquide va "enrober" l'eau à traiter débouchant axialement, sans la rencontrer directement, pour éviter la destruction de particules.

On a déjà proposé par ailleurs (NL-A-8602243) un système pour l'introduction d'un gaz dans un liquide qui comporte un organe constitué par une plaque de déviation, de forme circulaire, montée entre la sortie de la canalisation amenant le gaz et l'entrée de la canalisation amenant le liquide au système.

Si les résultats obtenus sont excellents,ils le sont néanmoins au prix de certaines complications de construction et d'agencement.

La présente invention vise à simplifier la mise en oeuvre de l'ensemble constitué par le système de pressurisation, la détente du liquide pressurisé et le mélange du liquide pressurisé avec le liquide à traiter.

L'invention a donc pour objet un dispositif pour l'injection de fluides dans un bassin de flottation où la flottation est réalisée par détente d'un liquide saturé d'un gaz sous pression dans un liquide contenant des particules en suspension qui doivent être séparées du liquide par flottation, qui comprend une capacité constituant un pot d'injection dans lequel le liquide, ayant subi une première détente, est à nouveau détendu en débouchant directement dans le pot d'injection par un orifice prévu entre l'extrémité d'une canalisation amenant le liquide pressurisé et un disque horizontal placé en regard du débouché de ladite canalisation caractérisé en ce que ledit pot d'injection est de forme cylindro-conique et présente à partir de sa base les trois zones successives suivantes :
- une zone de centrage et de répartition du liquide à traiter, pour éviter la création de passages préférentiels du liquide à traiter et augmenter la vitesse relative dudit liquide ;
- une zone de mélange située au dessus de l'orifice pour ,notamment assurer un temps de séjour et une énergie volumique, nécessaires au mélange intime des microbulles des particules en suspension dans le liquide à traiter ;
- une zone de décélération située dans la partie supérieure, évasée, du pot d'injection pour ralentir le flux liquide progressant dans le pot.

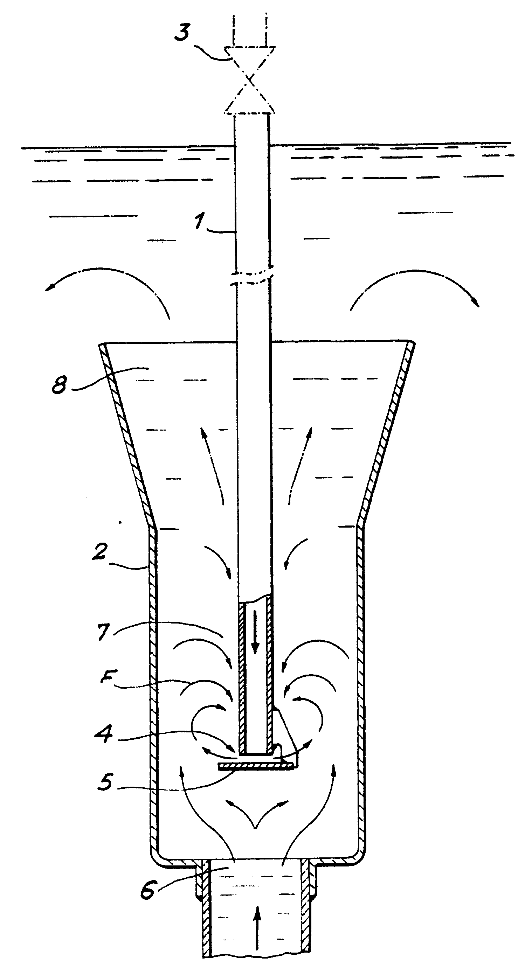

On a décrit ci-après, en référence au dessin annexé, une forme de réalisation du dispositif selon l'invention.

Dans l'exemple traité, le dispositif consiste en une canne 1 d'injection du liquide pressurisé débouchant dans une capacité 2 de forme générale cylindro-conique.

Un tel ensemble est placé dans le bassin de traitement d'un liquide, en l'espèce de l'eau, en vue de sa clarification.

Une première détente de l'eau pressurisée est obtenue par une vanne 3 prévue sur la canne 1, au-dessus de la surface du plan d'eau dans le bassin de traitement.

La canne 1 débouche dans la capacité 2 par un orifice 4 créé entre l'extrêmité de la canne et un disque horizontal 5.

Cet agencement du débouché de la canne dans la capacité a une double conséquence :
- Il crée une perte de charge qui permet d'amener l'eau pressurisée à une pression proche de la pression atmosphérique : c'est la détente et l'apparition de microbulles.
- Il induit à la nappe de liquide sortant de la canne une diffusion radiale au débouché de la canne et sur le disque et lui confère une vitesse suffisante pour réaliser au-dessus du disque 5 une dépression qui engendre un mouvement de rotation de la masse liquide (flèche F).

Il convient de donner au disque une dimension telle, avantageusement environ 2 à 4 fois le diamètre de la canne 1, que :
- le mélange ne s'effectue qu'au-dessus de celui-ci,
- l'impact direct de l'eau brute sur le Jet de diffusion radiale à grande vitesse soit évité,
- la vitesse de l'eau pressurisée soit notablement réduite (par exemple environ 1 à 5 m/s) avant la rencontre avec l'eau brute.

La capacité cylindro-conique 2 joue le rôle d'un pot de mélange. Elle comporte, à sa base, et suivant son axe, une canalisation 6 par laquelle est amenée l'eau à traiter. Cette disposition permet :
- de centrer la veine liquide d'eau brute lors de son introduction dans le pot d'injection 2, donc d'éviter la formation de passages préférentiels, spécialement le long des parois du pot ;
- d'augmenter la vitesse relative de l'eau brute par rapport à celle de l'eau pressurisée au débouché du disque, ce qui permet de limiter l'impact de cette dernière sur la paroi du pot et la coalescence des microbulles qui pourrait en résulter ;
- d'équilibrer les débits, dans le cas ou le bassin de flottation comporte une pluralité de pots mis en parallèle, avec une alimentation commune.

Le pot d'injection 2 présente, dans sa partie cylindrique située au-dessus du système de détente constitué par l'orifice 4 de la canalisation 1 et le disque 5 une zone de mélange 7 qui, d'une part, assure un temps de séjour et une énergie volumique nécessaires au mélange intime des microbulles et des particules ou flocs, et qui, d'autre part, a un diamètre suffisant pour éviter à l'eau pressurisée de venir s'éclater sur les parois du pot avec, là également, le risque de provoquer la coalescence des microbulles.

Enfin, la partie haute tronconique du pot d'injection forme, en s'évasant, une zone de décélération 8 qui permet de garder la composante ascensionnelle des microbules et de ralentir le flux liquide qui amorce un changement de direction du fait de la reprise du liquide clarifié en un point bas du bassin de flottation.

L'invention permet :
- de regrouper tout le dispositif au-dessus du flottateur, d'où absence de galerie technique ou d'éléments mobiles immergés (vannes ...) ;
- de démonter les éléments actifs de l'installation car aucune vidange de l'installation n'est nécessaire ;
- d'équiper très facilement d'anciens bassins en positionnant un ou plusieurs ensembles détente - pot de mélange.

## Revendications

1. Dispositif pour l'injection de fluides dans un bassin de flottation où la flottation est réalisée par détente d'un liquide saturé d'un gaz sous pression dans un liquide contenant des particules en suspension qui doivent être séparées du liquide par flottation, qui comprend une capacité constituant un pot d'injection (2) dans lequel le liquide, ayant subi une première détente, est à nouveau détendu en débouchant directement dans le pot d'injection par un orifice (4) prévu entre l'extrémité d'une canalisation (1) amenant le liquide pressurisé et un disque horizontal (5) placé en regard du débouché de ladite canalisation caractérisé en ce que ledit pot d'injection (2) est de forme cylindro-conique et présente à partir de sa base les trois zones successives suivantes:
- une zone de centrage et de répartition du liquide à traiter, pour éviter la création de passages préférentiels du liquide à traiter et augmenter la vitesse relative dudit liquide ;
- une zone de mélange (7) située au dessus de l'orifice (4), pour , notamment assurer un temps de séjour et une énergie volumique, nécessaires au mélange intime des microbulles des particules en suspension dans le liquide à traiter ;
- une zone de décélération (8) située dans la partie supérieure, évasée, du pot d'injection pour ralentir le flux liquide progressant dans le pot.

2. Dispositif selon la revendication 1 caractérisé en ce que ledit disque 5 présente une dimension choisie de manière à, notamment réduire la vitesse du liquide pressurisé avant sa rencontre avec le liquide à traiter, cette dimension étant comprise entre deux à quatre fois le diamètre de la canalisation (1).

## Patentansprüche

1. Vorrichtung zur Einspeisung von Fluiden in ein Flotationsbecken, in dem die die Flotation durch die Entspannung einer mit einem Gas gesättigten druckbeaufschlagten Flüssigkeit in einer Flüssigkeit, die Partikel, die durch Flotation von der Flüssigkeit getrennt werden sollen, in Suspension enthält, bewirkt wird, mit einem einen Einspritztopf (2) bildenden Gefäß, in dem die Flüssigkeit nach einer ersten Entspannung durch die Einleitung durch eine Öffnung (4) direkt in den Einspritztopf weiter entspannt wird, wobei diese Öffnung zwischen dem Ende eines die druckbeaufschlagte Flüssigkeit zuführenden Kanals (1) und einem der Mündung des Kanals gegenüberliegenden horizontalen Teller (5) angeordnet ist,
dadurch **gekennzeichnet**,
daß der Einspritztopf (2) die Form eines konischen Zylinders aufweist und, ausgehend vom Boden, drei aufeinanderfolgende Bereiche aufweist:
- einen Bereich zur Zentrierung und Verteilung der zu behandelnden Flüssigkeit, um die Schaffung bevorzugter Passagen für die zu behandelnde Flüssigkeit zu verhindern und die relative Geschwindigkeit der Flüssigkeit zu erhöhen;
- einen Mischbereich (7) oberhalb der Öffnung (4), um insbesondere eine ausreichende Verweildauer und eine Volumenenergie sicherzustellen, die zur innigen Vermischung der Mikrobläschen der in Suspension vorliegenden Partikel in der zu behandelnden Flüssigkeit notwendig sind;
- einen sich aufweitenden Verzögerungsbereich (8) im oberen Teil des Einspritztopfes, um die Strömungsgeschwindigkeit der Flüssigkeit im Topf zu verringern.

2. Vorrichtung nach Anspruch 1,
dadurch **gekennzeichnet**,
daß der Teller (5) so dimensioniert ist, daß insbesondere die Geschwindigkeit der druckbeaufschlagten Flüssigkeit vor ihrem Zusammentreffen mit der zu behandelnden Flüssigkeit verringert wird, wobei die Größe des Tellers zwischen dem zwei- und vierfachen Durchmesser des Kanals (1) liegt.

## Claims

1. Device for the injection of fluids into a flotation tank, where the flotation is carried out by expansion of a liquid saturated with a pressurized gas in a liquid containing particles in suspension which are to be separated from the liquid by flotation, which comprises a volume constituting an injection pot (2), in which the liquid, having undergone a first expansion, is again expanded by discharging directly into the injection pot through an orifice (4) provided between the end of a pipe (1) supplying the pressurized liquid and a horizontal disc (5) situated opposite the outlet of said pipe, characterized in that said injection pot (2) is of cylindro-conical shape and has, starting from its base, the following three successive zones:
- a centering and distribution zone for the liquid to be treated, for preventing the creation of preferential passages of the liquid to be treated and for increasing the relative speed of said liquid;
- a mixing zone (7) situated above the orifice (4) for, notably, assuring a dwell time and energy per unit volume necessary for the intimate mixing of the microbubbles and of the particles in suspension in the liquid to be treated;
- a deceleration zone (8) situated in the upper, widening-out portion of the injection pot for slowing down the liquid flow advancing through the pot.

2. Device according to Claim 1, characterized in that the dimension of said disc (5) is chosen so as to, notably, reduce the speed of the pressurized liquid before it meets the liquid to be treated, this dimension being from two to four times the diameter of the pipe (1).
